# EUROPEAN PATENT APPLICATION

(11) **EP 4 786 909 A1**
(43) Date of publication of application: **05.08.2026**
(21) Application number: 26154407.6
(22) Date of filing: 27.01.2026
(51) Int. Cl.: F28F 9/00, F28D 1/053, B60K 11/06, B60K 11/08, F28F 21/06

(54) **HEAT EXCHANGER WITH SEALING ELEMENT**

(30) Priority: 04.02.2025 IT 202500002004
(71) Applicant: DENSO THERMAL SYSTEMS S.p.A., 10046 Poirino (Torino) (IT)
(72) Inventor: PALMISANO, Antonino, I-10046 POIRINO (Torino) (IT); OSELLA, Mauro, I-10046 POIRINO (Torino) (IT); SANDRI, Fabio, I-10046 POIRINO (Torino) (IT)
(74) Representative: Vanzini, Christian

(57) **Abstract**

Heat exchanger for a motor vehicle, comprising a sealing element (10) arranged along at least one side plate (9) of the heat exchanger, the sealing element (10) comprising a connection part (11) made of plastic material coupled to the side plate (9), and a sealing part (13) made of elastomeric material connected to the connection part (11),
wherein the connection part (11) of the sealing strip (10) comprises a pair of fins (15) projecting towards a central web (9a) of the side plate (9) and provided with respective hooked ends (15a) respectively facing peripheral flanges (9b) of the side plate (9),
wherein the edges of the peripheral flanges (9b) of the side plate (9) have respective projections (9c) projecting inwardly of the side plate (9), the projections (9c) being snap-fittingly engaged by the hooked ends (15a) of the fins (15).

## Description

The present invention relates in general to heat exchangers for motor vehicles, and in particular to a heat exchanger comprising a pair of distributors, a plurality of parallel and coplanar tubes interconnecting said distributors, and a pair of side plates attached to opposite sides of said plurality of tubes, each of said side plates comprising a central web and a pair of peripheral flanges connected to the central web,
wherein a sealing element is arranged along at least one of said side plates, said sealing element comprising a connection part coupled to the side plate, and a sealing part connected to the connection part.

Heat exchangers are used to allow the transfer of thermal energy between two fluids without mixing the two fluids with one another. Some of them are designed to carry out a heat exchange between a heat-transfer fluid circulating in a circuit, and air flowing along the external surfaces of the heat exchanger.

In this context, the heat exchanger is generally installed in a structure defining a duct for the passage of air, inside which the heat exchanger is positioned. In order to maximize the efficiency of the assembly, sealing elements are provided around the heat exchanger so as to prevent air from leaking through the gaps between the periphery of the heat exchanger and the surface of the duct inside which the heat exchanger is positioned.

An object of the invention is to make available a solution for assembling sealing elements to the heat exchanger without resorting to the use of glues, adhesives or additional components to keep such sealing elements in position.

This object is achieved according to the invention by a heat exchanger of the type defined at the beginning, wherein the connection part of the sealing element comprises a pair of fins projecting towards the central web of the side plate and provided with respective hooked ends respectively facing the peripheral flanges of the side plate,
wherein the connection part of the sealing element engages only the inside of the side plate,
wherein the edges of the peripheral flanges of the side plate have respective projections projecting inwardly of the side plate, said projections being snap-fittingly engaged by the hooked ends of said fins,
wherein said fins rest on the central web of the side plate.

The sealing element is therefore assembled to the side plate of the heat exchanger thanks to the fins, which deform during assembly and remain hooked to the projections of the peripheral flanges of the side plate.

Preferred embodiments of the invention are defined in the dependent claims, which are to be understood as an integral part of the present description.

Further characteristics and advantages of the invention will become clearer from the following detailed description of an embodiment of the invention, given with reference to the accompanying drawings, provided purely by way of illustrative and non-limiting example, in which:
- Figure 1 is an exploded view of a heat exchanger provided with sealing strips according to the invention;
- Figure 2 is an enlarged and partially sectioned view of a detail of a side plate of the heat exchanger of figure 1;
- Figure 3 is an enlarged and partially sectioned view of a detail of the side plate during assembly of a sealing element; and
- Figures 4 to 6 are enlarged and partially sectioned views of the heat exchanger with the sealing element assembled.

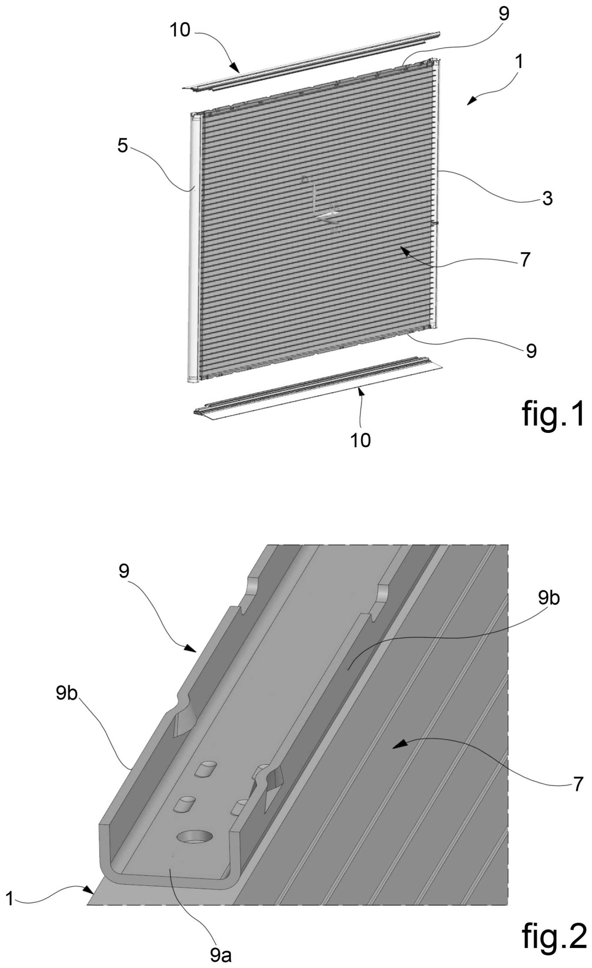

With reference to figure 1, a heat exchanger is shown, denoted overall by number 1. In the illustrated example, the heat exchanger 1 is a heat-transfer fluid-air heat exchanger of a motor vehicle. The heat exchanger 1 is configured to be installed in a structure (not illustrated), for example a distribution box of an HVAC system or another system configured to carry out a heat exchange between an air flow and a heat-transfer fluid. Said structure defines a duct for the passage of air, which duct is intended to receive the heat exchanger.

The direction of the air flowing through the heat exchanger 1 and carrying out a heat exchange with the heat-transfer fluid inside the heat exchanger 1 is orthogonal to the major faces of the heat exchanger 1.

The heat exchanger 1 comprises a first distributor 3 and a second distributor 5 and a plurality of parallel and coplanar tubes 7 interconnecting the first distributor 3 and the second distributor 5. Two side plates 9 are attached to opposite sides of the mass formed by the tubes 7.

The elements described above are joined together in a manner known per se, for example by brazing.

The heat exchanger further comprises two ducts respectively for inlet and outlet, for connection to a heat-transfer fluid circuit (not illustrated).

The side plates 9 are made of metallic material, in particular aluminium. With reference to figure 2, each side plate 9 consists of a C-shaped or U-shaped profile and comprises a central web 9a and a pair of peripheral flanges 9b connected to the central web 9a. Each side plate 9 is joined to the mass formed by the tubes 7 through the respective central web 9a. The peripheral flanges 9b project from the central web 9a and extend away from the mass formed by the tubes 7.

A respective sealing element 10 is arranged along at least one, preferably each, of said side plates 9. In the illustrated example, the sealing element is in the form of a strip, but it could have a different shape.

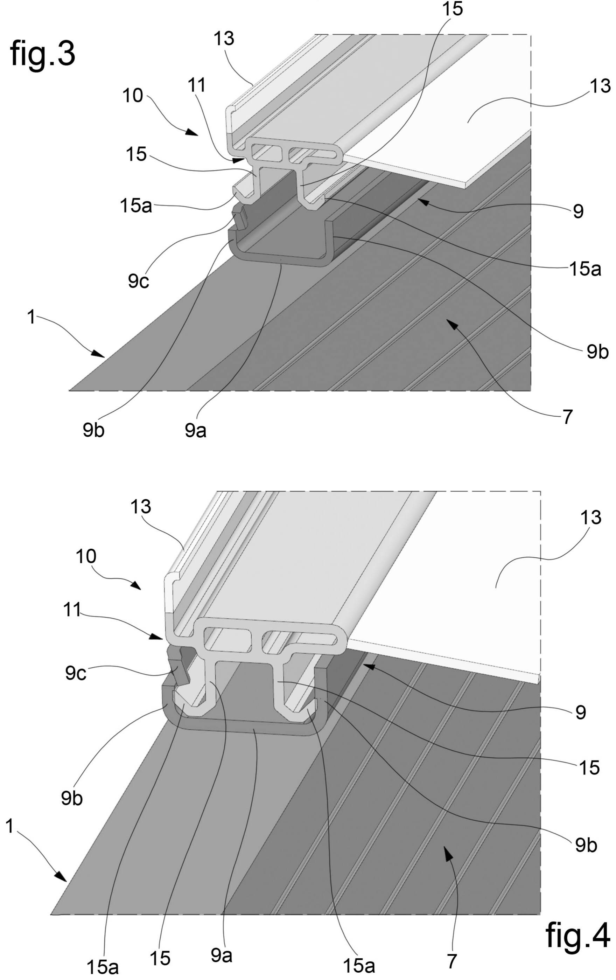

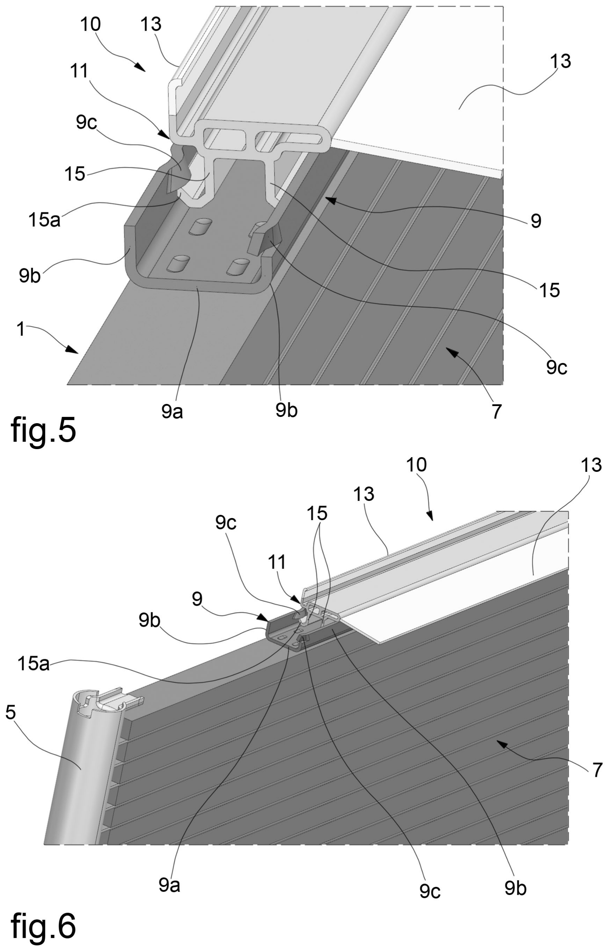

With reference to figures 3 to 6, the sealing element 10 comprises a connection part 11 coupled to the side plate 9, and at least one sealing part 13 connected to the connection part 11. The sealing part 13 forms at least one lip which, in the installed condition of the heat exchanger, is intended to engage at least one respective surface of the air duct in order to provide a seal between the periphery of the heat exchanger and said surface of the air duct. The sealing element 10 may be a bi-material element or, more generally, a multi-material element, for example with the connection part 11 made of plastic material and the sealing part 13 made of elastomeric material. According to alternative embodiments, the sealing element 10 may be an element made of a single material.

The connection part 11 of the sealing element 10 comprises a pair of fins 15 projecting towards the central web 9a of the side plate 9 and provided with respective hooked ends 15a respectively facing the peripheral flanges 9b of the side plate 9.

The connection part 11 of the sealing element 10 engages only the inside of the side plate 9, that is, the portion of the side plate 9 enclosed between the two peripheral flanges 9b and the central web 9a. In other words, the connection part 11 of the sealing element 10 engages only the concave portion of the C-shaped or U-shaped profile of the side plate 9.

The edges of the peripheral flanges 9b of the side plate 9 have respective projections 9c projecting inwardly of the side plate 9. The projections 9c are preferably formed as longitudinally localized deformations of the peripheral flanges 9b of the side plate 9, obtained for example by stamping the metal sheet of which the side plate 9 is formed. Preferably, each of the projections 9c has a ramp profile facing the edge of the respective peripheral flange 9b, and a step profile facing the central web 9a of the side plate 9.

The projections 9c are snap-fittingly engaged by the hooked ends 15a of the fins 15.

During assembly of the sealing element 10 to the side plate 9 of the heat exchanger 1, the fins 15 are inserted into the space between the two peripheral flanges 9b of the side plate 9 (figure 3). The initial engagement between the hooked ends 15a of the fins 15 and the ramp profiles of the projections 9c causes the fins 15 to flex towards one another. By continuing the movement of the sealing element 10 towards the side plate 9, the hooked ends 15a of the fins 15 are brought beyond the step profiles of the projections 9c, causing elastic release of the fins 15.

At the end of assembly, the hooked ends 15a of the fins 15 are therefore located below the step profiles of the projections 9c, while the curved portion of the hooked ends 15a of the fins 15 rests on the central web 9a of the side plate 9, as shown in figures 4-6. In this way, the sealing element 10 is held in position without requiring the use of glues, adhesives or additional components.

## Claims

1. Heat exchanger for a motor vehicle, comprising a pair of distributors (3, 5), a plurality of parallel and coplanar tubes (7) interconnecting said distributors (3, 5), and a pair of side plates (9) attached to opposite sides of said plurality of tubes (7), each of said side plates (9) comprising a central web (9a) and a pair of peripheral flanges (9b) connected to said central web (9a),
wherein a sealing element (10) is arranged along at least one of said side plates (9), said sealing element (10) comprising a connection part (11) coupled to the side plate (9), and a sealing part (13) connected to the connection part (11),
wherein the connection part (11) of the sealing element (10) comprises a pair of fins (15) projecting towards the central web (9a) of the side plate (9) and provided with respective hooked ends (15a) respectively facing the peripheral flanges (9b) of the side plate (9),
**characterized in that** the connection part (11) of the sealing element (10) engages only the inside of the side plate (9),
wherein the edges of the peripheral flanges (9b) of the side plate (9) have respective projections (9c) projecting inwardly of the side plate (9), said projections (9c) being snap-fittingly engaged by the hooked ends (15a) of said fins (15),
wherein said fins (15) rest on the central web (9a) of the side plate (9).

2. Heat exchanger according to claim 1, wherein said projections (9c) are formed as longitudinally localized deformations of the peripheral flanges (9b) of the side plate (9).

3. Heat exchanger according to any one of the pre-ceding claims, wherein the connection part (11) of the sealing element (10) is of plastic material, and the sealing part (13) of the sealing element (10) is of elastomeric material.
